# FASCICULE DE BREVET EUROPEEN

(11) **EP 3 235 180 B1**
(45) Date de publication et mention de la délivrance du brevet: **08.05.2019**
(21) Numéro de dépôt: 15828351.5
(22) Date de dépôt: 18.12.2015
(51) Int. Cl.: H04L 12/28

(54) **SYSTEME DOMOTIQUE POUR ECHANGER DES INFORMATIONS ENTRE AU MOINS UN TERMINAL MOBILE ET DES APPAREILS ELECTRIQUES DOMESTIQUES**
DOMOTIKSYSTEM FÜR DEN INFORMATIONSAUSTAUSCH ZWISCHEN MINDESTENS EINEM MOBILEN ENDGERÄT UND ELEKTRISCHEN HAUSHALTSGERÄTEN
HOME-AUTOMATION SYSTEM FOR EXCHANGING INFORMATION BETWEEN AT LEAST ONE MOBILE TERMINAL AND DOMESTIC ELECTRICAL APPLIANCES

(30) Priorité: 19.12.2014 FR 1462992
(43) Date de publication de la demande: 25.10.2017
(73) Titulaire: Texas De France, 13854 Aix en Provence (FR)
(72) Inventeur: CARLOTTI, Charles, 04800 Greoux les Bains (FR); BLOUIN, Philippe, 13510 Eguilles (FR); VIENNET, Raphaël, 13100 Aix en Provence (FR); LAFFONT, Damien, 13122 Ventabren (FR)
(74) Mandataire: Roman, Alexis
(86) Numéro de dépôt international: PCT/FR2015/053645
(87) Numéro de publication internationale: WO 2016/097652

(56) Documents cités:
- US-A1- 2010 299 639
- US-A1- 2012 062 360
- US-A1- 2013 304 860
- US-A1- 2014 181 199

## Description

### Domaine technique de l'invention.

L'invention a pour objet un système domotique pour échanger des informations entre au moins un terminal mobile et des appareils électriques domestiques.

Elle concerne le domaine technique de la transmission de signaux sans fil, entre un terminal mobile et des appareils électriques domestiques, et plus particulièrement la transmission de signaux permettant de contrôler le fonctionnement desdits appareils.

### État de la technique.

De nombreuses habitations sont aujourd'hui équipées de systèmes domotiques permettant de contrôler, grâce à un terminal mobile (Smartphone, tablette tactile,...), des appareils électriques domestiques tels que des appareils de chauffage et/ou climatisation, des éclairages, des volets roulants, des portes, etc. Diverses techniques existent pour contrôler le fonctionnement de ces appareils domestiques.

On connaît par exemple par le document brevet US 2012/0248207 (DRAKE), un système permettant de contrôler la température d'un appareil de chauffage et/ou climatisation. Dans ce document, un Smartphone émet un signal de commande à destination d'un contrôleur central. Ce dernier active l'appareil avec lequel il peut communiquer. La communication entre le Smartphone et l'appareil passe donc obligatoirement par le contrôleur central. En pratique, ce type de contrôleur central est onéreux, encombrant, et nécessite un câblage supplémentaire dans l'habitation.

On connaît également par le document brevet US 2010/0204834 (COMERFORD), un radiateur équipé d'un thermostat qui s'active dès qu'il détecte la présence d'un signal radiofréquence émis par un Smartphone. L'intérêt de cette technique est limité dans la mesure où le thermostat ne permet de contrôler qu'un seul appareil à la fois.

On connaît encore par le document brevet US 2014/017630 (KOTLICKI), un système comportant : - une zone de contrôle géographiquement délimitée dans l'espace ; - au moins un terminal mobile adapté pour émettre et recevoir, dans la zone de contrôle, des signaux radiofréquences ; - des appareils électriques installés dans la zone de contrôle, et plus particulièrement dans des sous-zones. Chaque appareil électrique est associé à une balise installée dans chaque sous-zone. Ces balises sont physiquement dissociées des appareils électriques. Dès qu'une balise détecte un signal émis par un Smartphone, cette balise active le fonctionnement de l'appareil électrique. L'utilisation de ces balises permet de contrôler plusieurs appareils à la fois. Toutefois, elle nécessite une installation complexe, et un câblage supplémentaire dans l'habitation.

Le document brevet US 2013/304860 (YANG) divulgue de manière générale : - une zone de contrôle géographiquement délimitée dans l'espace ; au moins un terminal mobile adapté pour émettre et recevoir, dans la zone de contrôle, des signaux radiofréquences ; - plusieurs appareils électriques domestiques installés dans la zone de contrôle ; - les appareils sont agencés en réseau de manière à communiquer pour véhiculer des informations entre eux, laquelle communication est réalisée par l'émission et la réception, dans la zone de contrôle, de signaux radiofréquences contenant lesdites informations ; - chaque appareil intègre un émetteur et un récepteur de signaux radiofréquences.

Ce document brevet US 2013/304860 (YANG) décrit plus particulièrement un procédé pour commander l'émission et la réception de contenu entre des dispositifs UPnP (Universal Plug and Play). Ce procédé comprend les étapes suivantes : la recherche d'une pluralité de dispositifs UPnP ; la réception, en provenance d'au moins un des dispositifs UPnP découverts, des adresses CEC desdits dispositifs UPnP ainsi que de l'adresse CEC d'un dispositif connecté par l'intermédiaire d'une interface HDMI ; la vérification, au moyen des adresses CEC reçues, de la connexion HDMI entre un dispositif source et un dispositif récepteur faisant partie des dispositifs UPnP découverts ; et la commande du contenu à transmettre en continu par le biais de la connexion HDMI entre le dispositif source et le dispositif récepteur. Ce procédé est particulièrement complexe à mettre en oeuvre.

Dans le document brevet US 2012/0062360 (WENDT), plusieurs appareils sont contrôlés par un contrôleur central. Ce dernier est relié à un émetteur dont la zone d'émission englobe chacun des appareils. Par l'intermédiaire d'un terminal mobile, un utilisateur peut transmettre des commandes au contrôleur central. Ces commandes sont ensuite transmises aux appareils via l'émetteur. Cette installation est complexe et nécessite un câblage supplémentaire du contrôleur central et de l'émetteur dans l'habitation.

L'invention vise à remédier à cet état des choses. En particulier, un objectif de l'invention est de pouvoir échanger simplement et efficacement des informations entre un terminal mobile et plusieurs appareils électriques, sans qu'il soit nécessaire d'installer et de câbler des éléments de contrôle supplémentaires.

Un objectif supplémentaire de l'invention est de proposer une solution technique qui soit peu onéreuse, facile à installer, et dont l'utilisation est aisée.

### Divulgation de l'invention.

La solution proposée par l'invention est un système domotique comportant :
- une zone de contrôle géographiquement délimitée dans l'espace,
- au moins un terminal mobile adapté pour émettre et recevoir, dans la zone de contrôle, des signaux radiofréquences,
- plusieurs appareils électriques domestiques installés dans la zone de contrôle,
- chaque appareil électrique domestique intègre un émetteur et un récepteur de signaux radiofréquences.
- les appareils électriques domestiques sont agencés en réseau de manière à communiquer pour véhiculer des informations entre eux, laquelle communication est réalisée par l'émission et la réception, dans la zone de contrôle, de signaux radiofréquences contenant lesdites informations,

Ce système domotique est remarquable en ce que :
- chaque appareil électrique domestique du réseau est adapté pour émettre depuis son émetteur et recevoir depuis son récepteur des signaux radiofréquence dans une zone d'émission/réception qui lui est propre,
- les appareils électriques domestiques du réseau sont disposés dans la zone de contrôle de sorte que la zone d'émission/réception d'un appareil inclut au moins un autre appareil, les zones d'émission/réception étant juxtaposées pour inclure tous lesdits appareils,
- chaque appareil est adapté pour communiquer avec le ou les autres appareils du réseau qui sont situés dans sa propre zone d'émission/réception, les informations étant véhiculés dans lesdites zones d'émission/réception, lesdites informations circulant directement entre lesdits appareils dudit réseau,
- la communication entre les appareils électriques domestiques du réseau est initiée en réponse à la réception, par au moins un desdits appareils, d'un signal radiofréquence émis par le terminal mobile dans la zone de contrôle.

Les avantages liés à cette invention sont nombreux. Tout d'abord, un émetteur/récepteur de signaux radiofréquences se présente généralement sous la forme d'un composant électronique de faible dimension, peu onéreux, et qui peut facilement être intégré parmi les autres composants électroniques de l'appareil. Il n'est donc pas nécessaire de prévoir un élément de contrôle annexe à l'appareil.

De plus, l'architecture en réseau qui est proposée, permet de faire circuler très simplement des informations, directement entre les appareils électriques, notamment des informations permettant de contrôler leur fonctionnement. A quelque endroit du réseau où le signal radiofréquence émit par le terminal mobile est reçut, touts les appareils communiquent entre eux.

En outre, seule l'émission d'un signal radiofréquence par le terminal mobile suffit pour initier la communication des appareils, que ce signal contienne ou non des instructions de commande spécifiques.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaire :
- La juxtaposition de toutes les zones d'émission/réception couvre préférentiellement toute la zone de contrôle.
- Les appareils électriques domestiques du réseau peuvent communiquer entre eux, de proche en proche.
- une information qui circule dans le réseau peut être soit exploitée par un seul des appareils électriques domestiques du réseau, soit être exploitée par chacun des appareils électriques domestiques du réseau, soit être est exploitée par certains appareils électriques domestiques du réseau, les autres appareils dudit réseau servant uniquement de relais ou de répéteur.
- La communication entre les appareils électriques domestiques peut être unidirectionnelle, des informations sont seulement émises depuis l'un des appareils servant d'émetteur, à destination des autres appareils électriques domestiques servant de récepteur ne renvoyant pas d'informations audit l'appareil émetteur.
- La communication entre les appareils électriques domestiques du réseau peut également être bidirectionnelle, chaque appareil, ou seulement certains d'entre eux, étant adaptés pour recevoir et émettre des informations avec les autres appareils.
- Préférentiellement, tout ou partie des appareils électriques domestiques du réseau sont des appareils de chauffage et/ou climatisation, les informations véhiculées dans le réseau, entre lesdits appareils, étant des commandes pour contrôler le fonctionnement desdits appareils de chauffage et/ou climatisation.
- Le terminal mobile peut être adapté pour émettre automatiquement, de manière continue ou par intermittence, un signal radiofréquence dans la zone de contrôle, lequel signal contient les commandes pour contrôler le fonctionnement des appareils de chauffage et/ou climatisation.
- Préférentiellement, si aucun des appareils électriques domestiques du réseau ne réceptionne un signal radiofréquence émis par le terminal mobile, dans la zone de contrôle, pendant une période déterminée, alors chacun des appareils de chauffage et/ou climatisation modifie son état de fonctionnement.
- Selon un mode particulier de réalisation : - un ou plusieurs autres terminaux mobiles sont adaptés pour émettre et recevoir, dans la zone de contrôle, des signaux radiofréquences ; - tous les terminaux mobiles sont associés à un rang de priorité par rapport à chacun des appareils de chauffage et/ou climatisation du réseau ; - le contrôle du fonctionnement de chaque appareil de chauffage et/ou climatisation du réseau est basé sur les rangs de priorité des terminaux mobiles.
- Chaque appareil de chauffage et/ou climatisation du réseau peut être programmé pour, lorsque son fonctionnement est actif, réguler sa température autour d'une valeur prédéfinie ; en réponse à la réception du signal radiofréquence émis par le terminal mobile dans la zone de contrôle, le premier appareil électrique domestique du réseau qui reçoit ledit signal avec l'intensité la plus forte et/ou qui est situé dans la zone d'émission/réception dudit terminal mobile : - modifie son état de fonctionnement et régule sa température autour de sa valeur prédéfinie, dans le cas où ledit premier appareil est un appareil de chauffage et/ou climatisation, et émet, dans le réseau, un signal radiofréquence contenant des commandes pour activer le fonctionnement des autres appareils de chauffage et/ou climatisation du réseau ; en réponse à la réception du signal radiofréquence émis par le premier appareil dans le réseau, chaque autre appareil de chauffage et/ou climatisation du réseau modifie son état de fonctionnement et régule sa température autour de sa valeur prédéfinie.
- Chaque appareil de chauffage et/ou climatisation du réseau peut également être programmé pour réguler sa température autour de la valeur prédéfinie, et pendant une période prédéfinie.
- Dans une variante de réalisation, le signal radiofréquence émis par le terminal mobile contient des commandes pour contrôler directement le fonctionnement des appareils de chauffage et/ou climatisation et réguler chacune de leur température autour d'une valeur prédéfinie ; en réponse à la réception d'un signal radiofréquence émis par le terminal mobile dans la zone de contrôle, le premier appareil électrique domestique du réseau qui reçoit ledit signal avec l'intensité la plus forte et/ou qui est situé dans la zone d'émission/réception dudit terminal mobile : - modifie son état de fonctionnement et régule sa température autour de sa valeur prédéfinie, dans le cas où ledit premier appareil est un appareil de chauffage et/ou climatisation ; - et émet, dans le réseau, un signal radiofréquence contenant des commandes pour contrôler le fonctionnement des autres appareils de chauffage et/ou climatisation du réseau ; en réponse à la réception du signal radiofréquence émis par le premier appareil dans le réseau, chaque autre appareil de chauffage et/ou climatisation du réseau modifie son état de fonctionnement et régule sa température autour de sa valeur prédéfinie.
- Le signal radiofréquence émis par le terminal mobile peut contenir des commandes pour contrôler le fonctionnement des appareils de chauffage et/ou climatisation et réguler chacune de leur température autour d'une valeur prédéfinie, et pendant une période prédéfinie.

- Selon un mode de réalisation avantageux : - tout ou partie des appareils électriques domestiques du réseau intègrent une horloge interne, le terminal mobile intégrant également une horloge interne ; - le signal radiofréquence émis par le terminal mobile dans la zone de contrôle peut contenir une information horaire qui correspond à l'heure renseignée dans son horloge interne au moment de l'émission dudit signal ; et en réponse à la réception de cette information horaire, les appareils électriques domestiques du réseau qui intègrent une horloge interne, synchronisent leur dite horloge avec l'horloge interne du terminal mobile.
- Selon un autre mode de réalisation avantageux: - tout ou partie des appareils électriques domestiques du réseau intègrent une mémoire dans laquelle sont enregistrés un ou plusieurs logiciels, programmes ou micro-programmes informatiques ; - le signal radiofréquence émis par le terminal mobile dans la zone de contrôle contient une ou plusieurs informations de mise à jour des logiciels, programmes ou micro-programmes informatiques enregistrées dans la mémoire desdits appareils électriques domestiques qui intègrent une telle mémoire ; - en réponse à la réception de ces informations de mise à jour, les appareils électriques domestiques du réseau qui intègrent une telle mémoire, mettent à jour leurs logiciels, programmes ou micro-programmes informatiques en fonction desdites informations de mise à jour.
- Les informations véhiculées dans le réseau, entre les appareils électriques domestiques, peuvent être des données de fonctionnement propres à chacun desdits appareils.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre un système conforme à l'invention, selon un premier mode de réalisation,
- la figure 2 illustre un système conforme à l'invention, selon un second mode de réalisation,
- la figure 3 schématise un réseau d'appareils électriques conformes à l'invention, et auquel est connecté un terminal mobile,
- la figure 4 illustre un terminal mobile adapté pour télécharger une application informatique sur un serveur distant,
- la figure 5 est une représentation schématique d'un appareil électrique conçu pour être utilisé dans un système conforme à l'invention.

Les éléments communs aux différents modes de réalisation, présentent la même référence sur les figures annexées.

### Modes préférés de réalisation de l'invention.

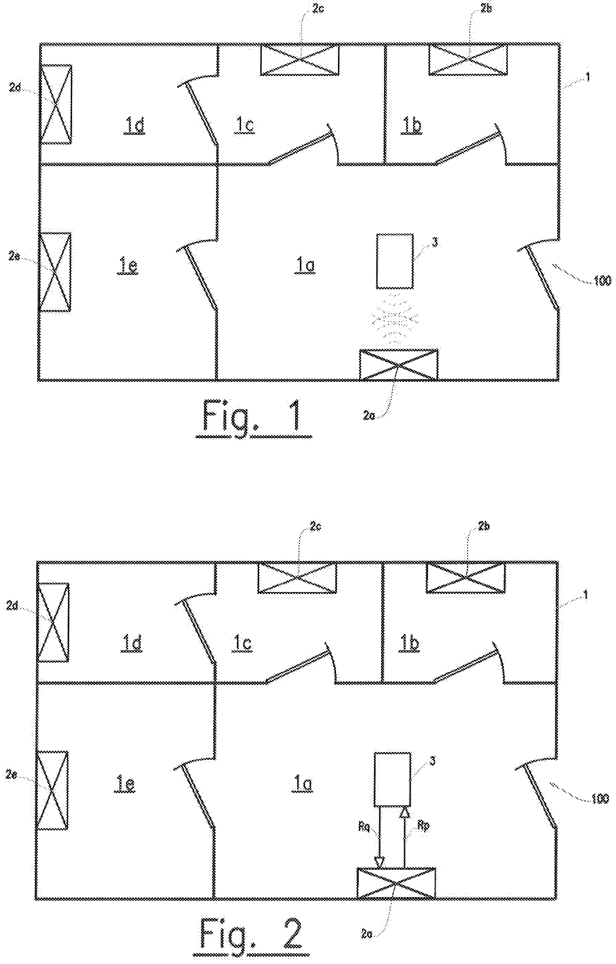

Sur les figures 1 et 2, le système objet de l'invention comprend une zone de contrôle 1, qui est géographiquement délimitée dans l'espace. Cette zone contrôlée peut consister en une ou plusieurs pièces d'un bâtiment, d'une habitation, d'un bureau, d'un hôtel, etc.

Cette zone de contrôle 1 est préférentiellement physiquement délimitée par des parois du type mur. Elle peut toutefois avoir des limites virtuelles qui correspondent par exemple à des coordonnées GPS. Dans ce dernier cas, la zone contrôlée peut par exemple consister en une ou plusieurs rues et/ou portions de rue d'une ville.

Cette zone de contrôle 1 peut être divisée en sous-zones 1a, 1b, 1c, 1d, 1e. La sous-zone 1a correspond par exemple au hall d'entrée d'une habitation, les sous zones 1c et 1e à des chambres, la sous-zone 1b un bureau, et la sous-zone 1d à une salle de bain.

La zone de contrôle 1 est avantageusement pourvue d'un seuil 100 par lequel un utilisateur peut entrer et sortir de ladite zone. Ce seuil 100 est par exemple matérialisé par une porte d'entrée. Il peut également s'agir d'un seuil virtuel correspondant à un point GPS spécifique.

Sur les figures 1 et 2, chaque sous-zone 1a, 1b, 1c, 1d, 1e présente un appareil électrique domestique, respectivement 2a, 2b, 2c, 2d, 2e. Ces appareils électriques domestiques sont préférentiellement des appareils de chauffage et/ou climatisation. Certains d'entre eux peuvent toutefois se présenter sous la forme d'autres appareils électriques domestiques, tels que des éclairages, des volets roulants, des portes, etc.

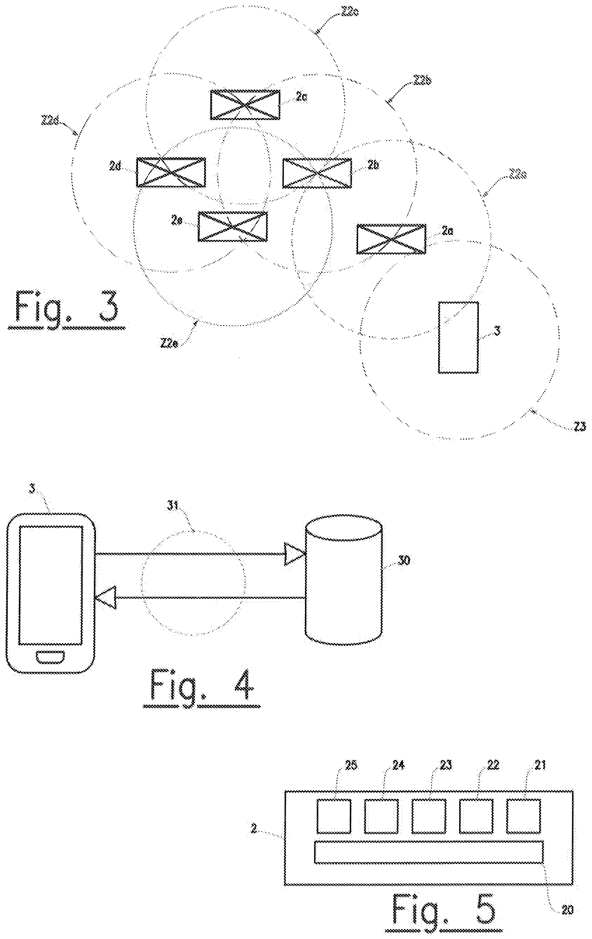

La figure 5 schématise un exemple de réalisation d'un appareil électrique domestique 2 utilisé dans le système objet de l'invention. Sur cette figure 5, l'appareil 2 est un radiateur électrique comprenant un élément chauffant 20, par exemple du type coeur de chauffe en fonte avec résistance électrique.

L'appareil 2 intègre un récepteur 21 de signaux radiofréquences adaptés pour recevoir des signaux radiofréquences transmis sans fil à partir d'un terminal mobile 3 ou à partir d'un autre appareil électrique installé dans la zone de contrôle 1. Ces signaux radiofréquences sont préférentiellement des signaux utilisant un protocole Bluetooth, d'autres protocoles tels que : ISM, Wifi, ANT, ZIGBEE, .., pouvant toutefois être utilisés. On peut par exemple utiliser un périphérique Bluetooth commercialisé par la société PANASONIC® sous la référence PAN1026-SPP-KIT, ou encore un module Wifi commercialisé par la société LANTRONIX® sous la référence XPW100100B-01.

L'appareil 2 intègre en outre un émetteur 22 de signaux radiofréquences utilisant des protocoles du type Bluetooth, ISM, Wifi, ANT, ZIGBEE, etc. Cet émetteur 22 est adapté pour émettre des signaux radiofréquences pour communiquer sans fil avec le terminal mobile 3 et/ou avec les autres appareils installés dans la zone de contrôle 1. L'émetteur 22 se présente par exemple sous la forme d'un module Bluetooth commercialisé par la société PANASONIC® sous la référence PAN1327/1317, ou encore un module Wifi commercialisé par la société LANTRONIX® sous la référence XPW100100B-01.

Le récepteur 21 et l'émetteur 22 se présentent préférentiellement sous la forme d'un composant électronique unique, du type émetteur/récepteur Bluetooth, ISM, Wifi, ANT, ZIGBEE, etc. Il est à noter que les composants référencés ci-dessus sont notamment de ce type. On utilise toutefois avantageusement un module Bluetooth NRF51422 BLE+ANT fabriqué par la société NORDICSEMI®.

L'appareil 2 peut également intégrer une horloge interne permettant de programmer différentes phases de fonctionnement dudit appareil sur une plage de temps donnée, par exemple sur une journée de 24 heures.

Le terminal mobile 3 est ainsi adapté pour émettre et recevoir des signaux radiofréquence dans une zone d'émission/réception Z3 qui lui est propre (figure 3).

L'appareil 2 comprend également un processeur 23 et une mémoire 24. Le processeur 23 est en communication avec le récepteur 21, l'émetteur 22, et la mémoire 24. Il est notamment adapté pour décoder les signaux reçus par le récepteur 21, et coder les signaux émis par l'émetteur 22. Le processeur 23 est également adapté pour contrôler le fonctionnement de l'appareil 2. Dans le cas où l'appareil 2 est un radiateur, il permet par exemple de fournir un signal de puissance électrique pour activer l'élément chauffant 20 à une température souhaitée.

Un ou plusieurs logiciels, programmes ou micro-programmes informatiques sont enregistrés dans la mémoire 24. Les instructions de ces logiciels, programmes ou micro-programmes, lorsqu'elles sont exécutées par le processeur 23, permettent de réaliser les fonctionnalités qui sont décrites plus avant dans la description. La mémoire 24 est également adaptée pour enregistrer un certain nombre d'informations, lesquelles informations sont présentées plus avant dans la description.

Une batterie 25, telle qu'une pile au lithium ou une pile solaire plate, peut assurer l'alimentation électrique des composants électroniques 21, 22, 23, 24. Cette alimentation électrique peut toutefois être directement assurée par celle de l'appareil 2.

Le récepteur 21, l'émetteur 22, le processeur 23, la mémoire 24, et éventuellement la batterie 25 et l'horloge interne, sont préférentiellement fixés sur un circuit électronique déjà intégré dans l'appareil 2, par exemple sur le circuit électronique d'un thermostat.

Le système objet de l'invention comprend également un terminal mobile 3 qui est adapté pour émettre et recevoir, dans la zone de contrôle 1, des signaux radiofréquences du type mentionné précédemment. Le terminal mobile 3 se présente préférentiellement sous la forme d'un Smartphone du type iPhone®, Samsung Galaxy®, iPad®, Samsung Tab®, etc. De manière classique, le terminal mobile 3 intègre un émetteur et un récepteur de signaux infrarouges similaires à ceux décrits précédemment en référence à la figure 5. Toujours de manière classique, le terminal mobile 3 intègre un processeur et une mémoire dans lequel sont enregistrés des programmes ou sous-programmes informatiques, dont les instructions, lorsqu'elles sont exécutées par ledit processeur, permettent de réaliser les fonctionnalités décrites plus avant dans la description.

En particulier, le terminal mobile 3 intègre une application informatique conçue pour permettre audit terminal de communiquer sans fil avec les appareils 2a, 2b, 2c, 2d, 2e installés dans la zone de contrôle 1. En se rapportant à la figure 4, le terminal mobile 3 peut télécharger cette application, depuis un serveur distant 30 qui est accessible depuis le réseau Internet 31. Cette application sert notamment d'interface homme-machine entre le terminal mobile 3 et les appareils 2a, 2b, 2c, 2d, 2e.

L'utilisateur, ou l'installateur, peut alors paramétrer cette application de sorte que le terminal mobile 3 puisse reconnaître et/ou être reconnu par les appareils 2a, 2b, 2c, 2d, 2e installés dans la zone de contrôle 1, et préférentiellement, uniquement par ceux là. On peut par exemple enregistrer, dans la mémoire 24 de chaque appareil 2a, 2b, 2c, 2d, 2e, une information d'identification du terminal mobile 3. Ou, plus simplement, on peut enregistrer dans son terminal mobile 3, une information d'identification de chacun des appareils 2a, 2b, 2c, 2d, 2e.

Les appareils 2a, 2b, 2c, 2d, 2e qui sont installés dans la zone de contrôle 1, sont agencés en réseau de manière à communiquer pour véhiculer des informations entre eux. Cette communication est réalisée par l'émission et la réception, dans la zone de contrôle 1, de signaux radiofréquences contenant lesdites informations. Les récepteurs 21 et les émetteurs 22 assurant l'émission et la réception de ces signaux.

La figure 3 schématise un mode de réalisation permettant d'agencer les appareils 2a, 2b, 2c, 2d, 2e en réseau. Chaque appareil 2a, 2b, 2c, 2d, 2e est adapté pour émettre et recevoir des signaux radiofréquence dans une zone d'émission/réception qui lui est propre, respectivement Z2a, Z2b, Z2c, Z2d, Z2e. Ces zones d'émission/réception Z2a, Z2b, Z2c, Z2d, Z2e dépendent en partie de la puissance des récepteurs 21 et des émetteurs 22. Leur configuration peut en outre être réglée par l'orientation d'une ou plusieurs antennes directionnelles associées aux récepteurs 21 et/ou aux émetteurs 22. Cette orientation des antennes peut être préalablement effectuée par un installateur.

Les appareils 2a, 2b, 2c, 2d, 2e sont disposés dans la zone de contrôle 1 de sorte que la zone d'émission/réception d'un appareil inclut au moins un autre appareil. La juxtaposition de toutes les zones d'émission/réception Z2a, Z2b, Z2c, Z2d, Z2e permet d'inclure tous les appareils 2a, 2b, 2c, 2d, 2e du réseau.

Pour assurer une transmission optimale des informations dans le réseau, chaque appareil 2a, 2b, 2c, 2d, 2e du réseau est adapté pour communiquer avec le ou les autres appareils du réseau qui sont situés dans sa propre zone d'émission/réception Z2a, Z2b, Z2c, Z2d, Z2e.

Sur l'exemple de la figure 3, la zone d'émission/réception Z2a de l'appareil 2a inclut l'appareil 2b. Elle chevauche une partie de la zone d'émission/réception Z2b.

La zone d'émission/réception Z2b de l'appareil 2b inclut l'appareil 2a, l'appareil 2c et l'appareil 2e.

La zone d'émission/réception Z2c de l'appareil 2c inclut l'appareil 2b et l'appareil 2d.

La zone d'émission/réception Z2d de l'appareil 2d inclut l'appareil 2c et l'appareil 2e.

La zone d'émission/réception Z2e de l'appareil 2e inclut l'appareil 2d et l'appareil 2b.

Ainsi, toutes les zones d'émission/réception Z2a, Z2b, Z2c, Z2d, Z2e se juxtaposent pour inclure tous les appareils 2a, 2b, 2c, 2d, 2e du réseau. Et chaque appareil 2a, 2b, 2c, 2d, 2e peut communiquer avec le ou les autres appareils du réseau qui sont situés dans sa propre zone d'émission/réception Z2a, Z2b, Z2c, Z2d, Z2e. Par exemple, l'appareil 2a communique uniquement avec l'appareil 2b tandis que ce dernier peut communiquer non seulement avec l'appareil 2a mais également avec les appareils 2c et 2e.

Sur la figure 3, la zone de contrôle 1 n'est pas totalement couverte par les zones d'émission/réception Z2a, Z2b, Z2c, Z2d, Z2e. Toutefois, pour assurer une mise en oeuvre optimale de l'invention, il est avantageux que la juxtaposition de toutes les zones d'émission/réception Z2a, Z2b, Z2c, Z2d, Z2e couvre toute la zone de contrôle 1.

Dans l'hypothèse où une information doit être véhiculée de l'appareil 2a vers l'appareil 2e, un jeu d'émission et de réception de signaux de signaux radiofréquences contenant cette information, permet de faire circuler cette dernière. Cette information va être émise par l'appareil 2a pour être réceptionnée par l'appareil 2b. Ce dernier va réémettre l'information vers l'appareil 2c qui va la réceptionner. L'appareil 2c va réémettre l'information vers l'appareil 2d qui va la réceptionner. Et enfin, l'appareil 2d va réémettre l'information vers l'appareil 2e qui va la réceptionner. Dans ce cas, tous les appareils 2a, 2b, 2c, 2d, 2e communiquent entre eux, de proche en proche.

Lorsque l'information est réceptionnée par l'appareil 2b, ce dernier va pouvoir également la réémettre directement vers l'appareil 2e, sans passer par les autres appareils 2c et 2d du réseau. Dans ce cas, les appareils 2a, 2b, 2c, 2d, 2e ne communiquent plus de proche en proche, mais choisissent le chemin le plus court pour véhiculer l'information entre l'appareil de départ 2a et l'appareil d'arrivée 2e.

Bien évidemment, l'information qui circule dans le réseau n'est pas nécessairement exploitée par un seul des appareils. Elle peut également être exploitée par chacun des appareils du réseau. Elle peut encore n'être exploitée par certains appareils du réseau, les autres appareils du réseau servant uniquement de relais ou de répéteur.

La communication entre les appareils 2a, 2b, 2c, 2d, 2e peut être unidirectionnelle. Dans ce cas, des informations sont seulement émises depuis l'un des appareils du réseau, par exemple 2a, à destination des autres appareils, par exemple 2b, 2c, 2d, 2e. Ces autres appareils récepteurs 2b, 2c, 2d, 2e ne renvoyant pas d'informations à l'appareil émetteur 2a.

La communication entre les appareils 2a, 2b, 2c, 2d, 2e peut également être bidirectionnelle. Chaque appareil, ou seulement certains d'entre eux, ont ainsi la possibilité d'échanger (c'est-à-dire recevoir et émettre) des informations avec les autres appareils.

Conformément à l'invention, la communication entre les appareils 2a, 2b, 2c, 2d, 2e du réseau (c'est-à-dire la transmission des informations) est initiée en réponse à la réception, par au moins un des appareils dudit réseau, d'un signal radiofréquence émis par le terminal mobile 3, dans la zone de contrôle 1. En d'autres termes, dès que le terminal mobile 3 se connecte à l'un quelconque des appareils 2a, 2b, 2c, 2d, 2e, alors des informations sont véhiculées dans le réseau.

Le signal radiofréquence émis par le terminal mobile 3 peut être initié manuellement par l'utilisateur dudit terminal, ou automatiquement, sans que cet utilisateur n'ait à intervenir. Ce signal radiofréquence peut être émis de façon continue ou par intermittence, par exemple toutes les secondes, toutes les 10 secondes, ou préférentiellement toutes les 30 minutes, voire toutes les heures.

Différents exemples de mise en oeuvre du système objet de l'invention vont maintenant être décrits en référence aux figures 1 et 2.

### Premier exempte de mise en oeuvre de l'invention : figure 1.

Dans ce mode de réalisation, tout ou parties des appareils 2a, 2b, 2c, 2d, 2e du réseau sont des appareils électriques de chauffage et/ou climatisation. Les appareils électriques sont du type VMC, radiateurs d'appoint mobiles ou fixes, radiateurs sèche-serviettes, etc. Les appareils de climatisation sont typiquement des VMC par exemple du type décrit dans le document brevet précité US 2014/017630.

Les appareils 2a, 2c et 2e sont des appareils électriques domestiques, tous ces appareils ou certain d'entre eux étant des appareils de chauffage et/ou climatisation.

Le système objet de l'invention est utilisé pour contrôler le fonctionnement de ces appareils. Plus particulièrement, les informations véhiculées dans le réseau, entre ces appareils 2a, 2b, 2c, 2d, 2e, sont des commandes pour contrôler le fonctionnement des appareils de chauffage et/ou climatisation 2a, 2c et 2e. Il peut s'agir par exemple d'une consigne pour réguler une température autour d'une valeur déterminée et/ou d'un temps de chauffage ou de climatisation. Cette consigne, lorsqu'elle est reçue par l'appareil concerné, va par exemple permettre de générer un signal de puissance électrique à destination d'un thermostat associé audit appareil.

Il peut également s'agir d'une consigne pour régler ou re-régler l'horloge interne de l'ensemble des appareils 2a, 2b, 2c, 2d, 2e ou seulement des appareils de chauffage et/ou climatisation 2a, 2c et 2e. Cette solution trouve notamment un avantage dans le cas d'un changement d'heure en été et/ou en hiver ou d'un changement de fuseau horaire.

Il peut encore s'agir d'une consigne pour mettre à jour les logiciels, programmes ou micro-programmes informatiques enregistrés dans la mémoire 24 de l'ensemble des appareils 2a, 2b, 2c, 2d, 2e ou seulement des appareils de chauffage et/ou climatisation 2a, 2c et 2e.

Le terminal mobile 3 émet un signal radiofréquence dans la zone de contrôle 1. Ce signal contient des informations permettant de contrôler le fonctionnement des appareils de chauffage et/ou climatisation 2a, 2c et 2e.

Dans le cas où le signal de contrôle est adapté pour régler ou re-régler l'horloge interne des appareils 2a, 2b, 2c, 2d, 2e ou seulement des appareils de chauffage et/ou climatisation 2a, 2c et 2e, ce signal contient une information horaire qui correspond à l'heure renseignée dans une horloge interne du terminal mobile 3 au moment de l'émission dudit signal. En effet, en pratique, l'horloge interne du terminal mobile 3 est relativement fiable dans la mesure où elle est régulièrement mise à jour par un serveur distant appartenant au réseau de communication (ou internet) auquel ledit terminal est connecté en permanence lorsque ledit terminal est activé. En réponse à la réception de cette information horaire, les appareils électriques domestiques 2a, 2b, 2c, 2d, 2e du réseau qui intègrent une horloge interne, peuvent alors très simplement synchroniser leur dite horloge avec celle du terminal mobile 3.

Dans le cas où le signal de contrôle est adapté pour mettre à jour les logiciels, programmes ou micro-programmes informatiques enregistrés dans la mémoire 24 de l'ensemble des appareils 2a, 2b, 2c, 2d, 2e ou seulement des appareils de chauffage et/ou climatisation 2a, 2c et 2e, ce signal contient une ou plusieurs informations de mise à jour. Ces informations de mise à jour sont par exemple préalablement téléchargées par le terminal mobile 3 suite à une connexion de ce dernier à un serveur ou site internet dédié. En réponse à la réception de ces informations dans le réseau, les appareils électriques domestiques 2a, 2b, 2c, 2d, 2e concernés par ces mises à jour modifient en conséquence les logiciels, programmes ou micro-programmes informatiques enregistrés dans leur mémoire 24.

Préférentiellement, le terminal mobile 3 émet automatiquement, de manière continue ou par intermittence, ce signal radiofréquence dans la zone de contrôle 1.

Les appareils 2a, 2b, 2c, 2d, 2e peuvent être programmés pour émettre de manière continue ou périodique des requêtes contenant une information d'activation propre à être reconnue par le terminal mobile 3. Ainsi, lorsque ce dernier pénètre dans la zone de contrôle 1, et plus particulièrement dans une des zones d'émission/réception Z2a, Z2b, Z2c, Z2d, Z2e, alors ledit terminal peut réceptionner ces requêtes. S'il reconnaît l'information d'activation, alors il émet automatiquement un signal radiofréquence contenant les commandes permettant de contrôler le fonctionnement des appareils de chauffage et/ou climatisation 2a, 2c et 2e. Ces commandes sont alors véhiculées dans le réseau comme cela a été décrit précédemment en référence à la figure 3.

De cette manière, dès que le terminal mobile 3 (i.e. l'utilisateur) se trouve dans la zone de contrôle 1, les appareils de chauffage et/ou climatisation 2a, 2c et 2e modifient automatiquement et instantanément leur état de fonctionnement.

Selon une première variante de réalisation, chaque appareil de chauffage et/ou climatisation 2a, 2c et 2e est programmé pour, lorsque son fonctionnement est actif, réguler sa température autour d'une valeur prédéfinie. Ils sont par exemple programmés pour fonctionner selon différents modes. Un mode confort, où la température ambiante est régulée autour de 20°C. Un mode économique où la température ambiante est régulée autour de 17°C. Et éventuellement un mode hors gel dans lequel l'appareil se met en marche dès que la température ambiante est inférieure à 7°C. Les températures de régulation qui sont programmées en mode confort et/ou en mode économique peuvent varier d'un appareil à l'autre. Par exemple :
- l'appareil 2a peut être programmé pour, lorsqu'il est en mode confort, réguler sa température à 24°C pendant 30 minutes, puis à 21°C pendant 2 heures, puis de nouveau à 24°C pendant 30 minutes, et ainsi de suite. En mode économique, il peut être programmé pour réguler sa température à 19°C. Dans le cas où il est pourvu d'une horloge interne, l'appareil 2a peut également être programmé pour, lorsqu'il est en mode confort, réguler sa température à 24°C sur une première plage horaire, puis à 21 °C sur une deuxième plage horaire, puis de nouveau à 24°C sur une troisième plage horaire, et ainsi de suite.
- en mode confort, l'appareil 2c peut être programmé pour réguler constamment sa température à 21°C et en mode économique, réguler sa température à 18°.
- en mode confort, l'appareil 2e peut être programmé pour réguler constamment sa température à 22°C et en mode économique, réguler sa température à 19°C pendant 12 heures, puis à 16°C pendant les 12 prochaines heures, et ainsi de suite. Dans le cas où il est pourvu d'une horloge interne, l'appareil 2e peut également être programmé pour, lorsqu'il est en mode économique, réguler sa température à 19°C sur une première plage horaire, puis à 16°C sur une seconde plage horaire.

Les informations qui vont être véhiculées dans le réseau, par l'ensemble des appareils, vont permettre de déclencher la programmation des appareils de chauffage et/ou climatisation 2a, 2c et 2e, éventuellement la synchronisation de l'horloge interne desdits appareils de chauffage et/ou climatisation ou de l'ensemble des appareils du réseau, et éventuellement encore la mise à jour des logiciels, programmes ou micro-programmes informatiques enregistrés dans la mémoire 24 desdits appareils de chauffage et/ou climatisation ou de l'ensemble des appareils du réseau.

Selon une seconde variante de réalisation, le signal radiofréquence émis par le terminal mobile 3 contient des commandes pour contrôler directement le fonctionnement des appareils de chauffage et/ou climatisation 2a, 2c et 2e et réguler chacune de leur température autour d'une valeur prédéfinie, éventuellement pendant une période prédéfinie. Cette période prédéfinie peut être une plage horaire définie sur une ou plusieurs plages horaires calées sur l'horloge interne des appareils de chauffage et/ou climatisation 2a, 2c et 2e. Ce sont donc les informations qui vont être véhiculées dans le réseau, par l'ensemble des appareils, qui vont directement contrôler le fonctionnement des appareils de chauffage et/ou climatisation 2a, 2c et 2e.

Quelle que soit la variante de réalisation, les appareils de chauffage et/ou climatisation sont par exemple initialement en mode économique. En réponse à la réception du signal radiofréquence émis par le terminal mobile 3 dans la zone de contrôle 1, le premier appareil 2a qui reçoit le signal, va initier un certain nombre d'actions. Le premier appareil 2a est celui qui reçoit le signal avec l'intensité la plus forte et/ou celui qui est situé dans la zone d'émission/réception Z3 du terminal mobile 3.

Si ce premier appareil 2a est un appareil de chauffage et/ou climatisation, alors cet appareil va modifier son état de fonctionnement. Il va par exemple passer du mode économique au mode confort, ce passage se faisant directement ou de manière graduée dans le temps. Le premier appareil 2a va également pouvoir synchroniser son horloge interne avec celle du terminal mobile 3 dans le cas où le signal radiofréquence émis par ledit terminal contient l'information horaire qui correspond à l'heure renseignée dans l'horloge interne dudit terminal. Le premier appareil 2a va encore pouvoir mettre à jour les logiciels, programmes ou micro-programmes informatiques enregistrés dans sa mémoire 24 dans le cas où le signal radiofréquence émis par ledit terminal contient des informations de mise à jour qui le concernent. Ce premier appareil 2a de chauffage et/ou climatisation va ensuite, ou simultanément, émettre dans le réseau, un signal radiofréquence.

Dans le cadre de la première variante de réalisation, le signal radiofréquence émis par le premier appareil 2a, contient une information adaptée pour déclencher l'un des programmes de régulation enregistré dans les autres appareils de chauffage et/ou climatisation 2c, 2e. Ce signal radiofréquence émis par le premier appareil 2a peut également contenir l'information horaire qui correspond à l'heure renseignée dans l'horloge interne du terminal mobile 3 pour synchronisation de l'horloge interne des autres appareils de chauffage et/ou climatisation 2c et 2e et/ou des autres appareils 2b, 2d du réseau. Le signal radiofréquence émis par le premier appareil 2a peut encore contenir des informations de mise à jour pour la mise à jour des logiciels, programmes ou micro-programmes informatiques enregistrés dans la mémoire 24 des autres appareils de chauffage et/ou climatisation 2c et 2e et/ou des autres appareils 2b, 2d du réseau.

Dans le cadre de la seconde variante de réalisation, le signal radiofréquence émis par le premier appareil 2a, contient des commandes pour activer directement le fonctionnement des autres appareils de chauffage et/ou climatisation 2c, 2e. Ces commandes sont celles initialement contenues dans le signal radiofréquence émis par le terminal mobile 3. Il peut toutefois s'agir de commandes se présentant sous une forme différente, et permettant de contrôler de la même manière le fonctionnement des autres appareils de chauffage et/ou climatisation 2c, 2e. Ce signal radiofréquence émis par le premier appareil 2a peut également contenir l'information horaire qui correspond à l'heure renseignée dans l'horloge interne du terminal mobile 3 pour synchronisation de l'horloge interne des autres appareils de chauffage et/ou climatisation 2c et 2e et/ou des autres appareils 2b, 2d du réseau. Le signal radiofréquence émis par le premier appareil 2a peut encore contenir des informations de mise à jour pour la mise à jour des logiciels, programmes ou micro-programmes informatiques enregistrés dans la mémoire 24 des autres appareils de chauffage et/ou climatisation 2c et 2e et/ou des autres appareils 2b, 2d du réseau.

Dans le cas où ce premier appareil n'est pas un appareil de chauffage et/ou climatisation (par exemple un volet roulant 2b), alors cet appareil va seulement émettre, dans le réseau, un signal radiofréquence permettant d'activer le fonctionnement des appareils de chauffage et/ou climatisation 2a, 2c et 2e du réseau. Ce signal radiofréquence émis par le premier appareil 2b peut également contenir l'information horaire qui correspond à l'heure renseignée dans l'horloge interne du terminal mobile 3 pour synchronisation de l'horloge interne des appareils de chauffage et/ou climatisation 2a, 2c et 2e et/ou de l'autre appareil 2d du réseau. Le signal radiofréquence émis par le premier appareil 2b peut encore contenir des informations de mise à jour pour la mise à jour des logiciels, programmes ou micro-programmes informatiques enregistrés dans la mémoire 24 des appareils de chauffage et/ou climatisation 2a, 2c et 2e et/ou de l'autre appareil 2d du réseau.

En tout état de cause, en réponse à la réception du signal radiofréquence émit par le premier appareil 2a dans le réseau, chaque autre appareil de chauffage et/ou climatisation 2c, 2e modifie son état de fonctionnement et régule sa température autour de sa valeur prédéfinie. Ces autres appareils de chauffage et/ou climatisation 2c et 2e et/ou les autres appareils 2b, 2d du réseau peuvent également synchroniser leur horloge interne avec celle du terminal mobile 3 et/ou mettre à jour les logiciels, programmes ou micro-programmes informatiques enregistrés dans leur mémoire 24.

Si aucun des appareils 2a, 2b, 2c, 2d, 2e du réseau ne réceptionne un signal radiofréquence émis par le terminal mobile 3, dans la zone de contrôle 1, alors chacun des appareils de chauffage et/ou climatisation 2a, 2c, 2e modifie son état de fonctionnement. Les appareils 2a, 2c, 2e vont par exemple passer du mode confort au mode économique, ce passage se faisant directement ou de manière graduée dans le temps.

Il est avantageux que ce changement d'état de fonctionnement n'intervienne qu'en l'absence de signal radiofréquence émis par le terminal mobile 3 pendant une période déterminée. En effet, il peut arriver que le terminal mobile 3 (i.e. l'utilisateur) soit momentanément en dehors de la zone de contrôle 1, ou en dehors des zones d'émission/réception Z2a, Z2b, Z2c, Z2d, Z2e. Il convient donc que les appareils 2a, 2c, 2e ne passent pas directement en mode économique dans ce cas de figure. Les appareils 2a, 2c, 2e peuvent par exemple être programmés de la manière suivante :
- en l'absence de réception de signal radiofréquence pendant moins de 2 heures : le mode de fonctionnement des appareils 2a, 2c, 2e ne change pas ;
- en l'absence de réception de signal radiofréquence de 2 heures à 24 heures : les appareils 2a, 2c, 2e passent en mode économique ;
- en l'absence de réception de signal radiofréquence pendant plus de 24 heures: les appareils 2a, 2c, 2e passent en mode hors gel.

Selon un mode particulier de réalisation, un ou plusieurs autres terminaux mobiles peuvent être adaptés pour émettre et recevoir, dans la zone de contrôle 1, des signaux radiofréquences. Ces derniers sont du même type que ceux émis par le terminal mobile 3.

Dans le cas où la zone de contrôle 1 est une habitation, le terminal mobile 3 peut être associé aux parents, et d'autres terminaux mobiles aux enfants. Il est dans ce cas avantageux que tous les terminaux mobiles, y compris le terminal mobile 3, soient associés à un rang de priorité par rapport à chacun des appareils de chauffage et/ou climatisation 2a, 2c, 2e. Le contrôle du fonctionnement de chacun de ces appareils 2a, 2c, 2e est avantageusement basé sur les rangs de priorité des terminaux mobiles. Ainsi, chaque terminal mobile peut être utilisé pour déterminer lequel, d'une pluralité de terminaux mobiles présents dans la zone de contrôle 1, permettra de contrôler le fonctionnement des appareils 2a, 2c, 2e.

Par exemple, si seul le terminal mobile 3 des parents est présent dans la zone de contrôle 1, alors ledit terminal mobile peut émettre un signal radiofréquence pour que seul l'appareil 2c installé dans leur chambre 1c passe en mode confort, l'appareil 2e installé dans la chambre 1e des enfants restant en mode économique. Inversement, si seul le terminal mobile des enfants est présent dans la zone de contrôle 1, alors ledit terminal mobile peut émettre un signal radiofréquence pour que seul l'appareil 2e installé dans la chambre 1e passe en mode confort, l'appareil 2c installé dans la chambre 1c des parents restant en mode économique.

Par contre, si tous les terminaux mobiles sont présents dans la zone de contrôle 1, les appareils 2c et 2e vont recevoir simultanément des consignes antagonistes visant à les faire passer dans un mode confort et en même temps dans un mode économique. Les rangs de priorité des terminaux mobiles vont permettre de résoudre ce conflit, de sorte que les deux appareils 2c et 2e passent en mode confort.

### Deuxième exemple de mise en oeuvre de l'invention : figure 2.

Dans ce mode de réalisation, les informations véhiculées dans le réseau, entre les appareils électriques domestiques 2a, 2b, 2c, 2d, 2e, sont des données de fonctionnement propres à chacun desdits appareils.

Les appareils 2a, 2b, 2c, 2d, 2e peuvent tous être, ou pas, ou certains d'entre eux seulement, des appareils électriques de chauffage et/ou climatisation.

Ces informations concernent par exemple la localisation de chaque appareil 2a, 2b, 2c, 2d, 2e dans la zone de contrôle 1, ses périodes de fonctionnement, sa consommation électrique, les périodes où le terminal mobile 3 a été à proximité dudit appareil, etc. Toutes ces informations peuvent être traitées par les processeurs 23 pour déterminer les habitudes de l'utilisateur associé au terminal mobile 3, et planifier les modalités de fonctionnement de chaque appareil 2a, 2b, 2c, 2d, 2e du réseau.

Plus particulièrement, un ou plusieurs programmes sont enregistrés dans la mémoire 24 de chaque appareil 2a, 2b, 2c, 2d, 2e. Les instructions de ces programmes, lorsqu'elles sont exécutées par le processeur 23, permettent de déterminer des données de fonctionnement propres à l'appareil, telles que les périodes d'activation dudit appareil, et/ou la consommation énergétique dudit appareil, lesquelles données sont ensuite enregistrées dans la mémoire 24. Chaque appareil 2a, 2b, 2c, 2d, 2e du réseau renferme donc des informations qui lui sont propres.

Le système objet de l'invention est utilisé pour que l'utilisateur puisse récupérer ces informations par l'intermédiaire du terminal mobile 3.

Le signal radiofréquence émis par le terminal mobile 3, dans la zone de contrôle 1, contient une requête Rq, laquelle requête comprend des commandes permettant d'interroger chacun des appareils 2a, 2b, 2c, 2d, 2e du réseau, ou seulement certains d'entre eux, pour qu'ils communiquent les informations contenues dans leur mémoire 24.

En réponse à la réception du signal radiofréquence émis par le terminal mobile 3, le premier appareil 2a qui reçoit ledit signal (i.e. l'appareil qui reçoit le signal avec l'intensité la plus forte et/ou celui qui est situé dans la zone d'émission/réception Z3 du terminal mobile 3), émet, dans le réseau, un signal radiofréquence. Ce signal contient une requête identique ou similaire à la requête R.

En réponse à la réception du signal radiofréquence émis par le premier appareil 2a, les autres appareils 2b, 2c, 2d, 2e émettent, dans le réseau, et à destination du premier appareil 2a, des signaux radiofréquences contenant les données enregistrées dans leur mémoire 24. Le premier appareil 2a est maintenant en possession de l'ensemble des données de fonctionnement propre à chaque appareil 2a, 2b, 2c, 2d, 2e du réseau.

En réponse à la réception de toutes ces données, le premier appareil 2a émet (Rp), à destination du terminal mobile 4, lesdites données reçues, ainsi que les données enregistrées dans sa propre mémoire.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- La zone de contrôle 1 n'est pas nécessairement divisée en sous-zone.
- Chaque sous-zone 1a, 1b, 1c, 1d, 1e peut intégrer davantage d'appareils électriques 2a, 2b, 2c, 2d, 2e.
- Certaines sous-zones 1a, 1b, 1c, 1d, 1e peuvent ne pas intégrer d'appareils électriques 2a, 2b, 2c, 2d, 2e.

Le terminal mobile 3 peut se présenter sous la forme d'une télécommande.

## Revendications

1. Système domotique comportant :
- une zone de contrôle (1) géographiquement délimitée dans l'espace,
- au moins un terminal mobile (3) adapté pour émettre et recevoir, dans la zone de contrôle (1), des signaux radiofréquences,
- plusieurs appareils électriques domestiques (2a, 2b, 2c, 2d, 2e) installés dans la zone de contrôle (1),
- chaque appareil électrique domestique (2a, 2b, 2c, 2d, 2e) intègre un émetteur (22) et un récepteur (21) de signaux radiofréquences,
- les appareils électriques domestiques (2a, 2b, 2c, 2d, 2e) sont agencés en réseau de manière à communiquer pour véhiculer des informations entre eux, laquelle communication est réalisée par l'émission et la réception, dans la zone de contrôle (1), de signaux radiofréquences contenant lesdites informations,
- la communication entre les appareils électriques domestiques (2a, 2b, 2c, 2d, 2e) du réseau est initiée en réponse à la réception, par au moins un desdits appareils, d'un signal radiofréquence émis par le terminal mobile (3) dans la zone de contrôle (1),
**se caractérisant par le fait que :**
- chaque appareil électrique domestique (2a, 2b, 2c, 2d, 2e) du réseau est adapté pour émettre depuis son émetteur (22) et recevoir depuis son récepteur (21) des signaux radiofréquence dans une zone d'émission/réception (Z2a, Z2b, Z2c, Z2d, Z2e) qui lui est propre,
- les appareils électriques domestiques (2a, 2b, 2c, 2d, 2e) du réseau sont disposés dans la zone de contrôle (1) de sorte que la zone d'émission/réception (Z2a, Z2b, Z2c, Z2d, Z2e) d'un appareil inclut au moins un autre appareil, les zones d'émission/réception (Z2a, Z2b, Z2c, Z2d, Z2e) étant juxtaposées pour inclure tous lesdits appareils,
- chaque appareil (2a, 2b, 2c, 2d, 2e) est adapté pour communiquer avec le ou les autres appareils du réseau qui sont situés dans sa propre zone d'émission/réception (Z2a, Z2b, Z2c, Z2d, Z2e), les informations étant véhiculés dans lesdites zones d'émission/réception, lesquelles informations circulent directement entre lesdits appareils dudit réseau.

2. Système domotique selon la revendication 1, dans lequel la juxtaposition de toutes les zones d'émission/réception (Z2a, Z2b, Z2c, Z2d, Z2e) couvre toute la zone de contrôle (1).

3. Système domotique selon l'une des revendications précédentes, dans lequel les appareils électriques domestiques (2a, 2b, 2c, 2d, 2e) du réseau communiquent entre eux, de proche en proche.

4. Système domotique selon l'une des revendications 1 à 3, dans lequel une information qui circule dans le réseau :
- est exploitée par un seul des appareils électriques domestiques (2a, 2b, 2c, 2d, 2e) du réseau,
- ou est exploitée par chacun des appareils électriques domestiques (2a, 2b, 2c, 2d, 2e) du réseau,
- ou est exploitée par certains appareils électriques domestiques (2a, 2b, 2c, 2d, 2e) du réseau, les autres appareils dudit réseau servant uniquement de relais ou de répéteur.

5. Système domotique selon l'une des revendications 1 à 4, dans lequel la communication entre les appareils électriques domestiques (2a, 2b, 2c, 2d, 2e) est unidirectionnelle, des informations sont seulement émises depuis l'un des appareils (2a) servant d'émetteur, à destination des autres appareils électriques domestiques (2b, 2c, 2d, 2e) servant de récepteur ne renvoyant pas d'informations audit l'appareil émetteur.

6. Système domotique selon l'une des revendications 1 à 4, dans lequel la communication entre les appareils électriques domestiques (2a, 2b, 2c, 2d, 2e) du réseau est bidirectionnelle, chaque appareil, ou seulement certains d'entre eux, étant adaptés pour recevoir et émettre des informations avec les autres appareils.

7. Système domotique selon l'une des revendications 1 à 6, dans lequel :
- tout ou partie des appareils électriques domestiques (2a, 2c, 2e) du réseau sont des appareils de chauffage et/ou climatisation,
- les informations véhiculées dans le réseau, entre les appareils électriques domestiques (2a, 2b, 2c, 2d, 2e), sont des commandes pour contrôler le fonctionnement desdits appareils de chauffage et/ou climatisation (2a, 2c, 2e).

8. Système domotique selon la revendication 7, dans lequel le terminal mobile (3) est adapté pour émettre automatiquement, de manière continue ou par intermittence, un signal radiofréquence dans la zone de contrôle (1), lequel signal contient les commandes pour contrôler le fonctionnement des appareils de chauffage et/ou climatisation (2a, 2c, 2e).

9. Système domotique selon la revendication 8, dans lequel si aucun des appareils électriques domestiques (2a, 2b, 2c, 2d, 2e) du réseau ne réceptionne un signal radiofréquence émis par le terminal mobile (3), dans la zone de contrôle (1), pendant une période déterminée, alors chacun des appareils de chauffage et/ou climatisation (2a, 2c, 2e) modifie son état de fonctionnement.

10. Système domotique selon l'une des revendications 8 ou 9, dans lequel :
- un ou plusieurs autres terminaux mobiles sont adaptés pour émettre et recevoir, dans la zone de contrôle (1), des signaux radiofréquences,
- tous les terminaux mobiles sont associés à un rang de priorité par rapport à chacun des appareils de chauffage et/ou climatisation (2a, 2c, 2e) du réseau,
- le contrôle du fonctionnement de chaque appareil de chauffage et/ou climatisation (2a, 2c, 2e) du réseau est basé sur les rangs de priorité des terminaux mobiles.

11. Système domotique selon l'une des revendications 7 à 10, dans lequel :
- chaque appareil de chauffage et/ou climatisation (2a, 2c, 2e) du réseau est programmé pour, lorsque son fonctionnement est actif, réguler sa température autour d'une valeur prédéfinie,
- en réponse à la réception du signal radiofréquence émis par le terminal mobile (3) dans la zone de contrôle (1), le premier appareil électrique domestique (2a, 2b, 2c, 2d, 2e) du réseau qui reçoit ledit signal avec l'intensité la plus forte et/ou qui est situé dans la zone d'émission/réception (Z3) dudit terminal mobile :
∘ modifie son état de fonctionnement et régule sa température autour de sa valeur prédéfinie, dans le cas où ledit premier appareil est un appareil de chauffage et/ou climatisation,
∘ émet, dans le réseau, un signal radiofréquence contenant des commandes pour activer le fonctionnement des autres appareils de chauffage et/ou climatisation (2a, 2c, 2e) du réseau,
- en réponse à la réception du signal radiofréquence émis par le premier appareil dans le réseau, chaque autre appareil de chauffage et/ou climatisation (2a, 2c, 2e) du réseau modifie son état de fonctionnement et régule sa température autour de sa valeur prédéfinie.

12. Système domotique selon la revendication 11, dans lequel chaque appareil de chauffage et/ou climatisation (2a, 2c, 2e) du réseau est également programmé pour réguler sa température autour de la valeur prédéfinie, et pendant une période prédéfinie.

13. Système domotique selon l'une des revendications 7 à 10, dans lequel :
- le signal radiofréquence émis par le terminal mobile (3) contient des commandes pour contrôler directement le fonctionnement des appareils de chauffage et/ou climatisation (2a, 2c, 2e) et réguler chacune de leur température autour d'une valeur prédéfinie,
- en réponse à la réception d'un signal radiofréquence émis par le terminal mobile (3) dans la zone de contrôle (1), le premier appareil électrique domestique (2a, 2b, 2c, 2d, 2e) du réseau qui reçoit ledit signal avec l'intensité la plus forte et/ou qui est situé dans la zone d'émission/réception (Z3) dudit terminal mobile :
o modifie son état de fonctionnement et régule sa température autour de sa valeur prédéfinie, dans le cas où ledit premier appareil est un appareil de chauffage et/ou climatisation,
o émet, dans le réseau, un signal radiofréquence contenant des commandes pour contrôler le fonctionnement des autres appareils de chauffage et/ou climatisation (2a, 2c, 2e) du réseau,
- en réponse à la réception du signal radiofréquence émis par le premier appareil dans le réseau, chaque autre appareil de chauffage et/ou climatisation (2a, 2c, 2e) du réseau modifie son état de fonctionnement et régule sa température autour de sa valeur prédéfinie.

14. Système domotique selon la revendication 13, dans lequel le signal radiofréquence émis par le terminal mobile (3) contient des commandes pour contrôler le fonctionnement des appareils de chauffage et/ou climatisation (2a, 2c, 2e) et réguler chacune de leur température autour d'une valeur prédéfinie, et pendant une période prédéfinie.

15. Système domotique selon l'une des revendications 1 à 14, dans lequel :
- tout ou partie des appareils électriques domestiques (2a, 2b, 2c, 2d, 2e) du réseau intègrent une horloge interne, le terminal mobile (3) intégrant également une horloge interne,
- le signal radiofréquence émis par le terminal mobile (3) dans la zone de contrôle (1) contient une information horaire qui correspond à l'heure renseignée dans son horloge interne au moment de l'émission dudit signal.
- en réponse à la réception de cette information horaire, les appareils électriques domestiques (2a, 2b, 2c, 2d, 2e) du réseau qui intègrent une horloge interne, synchronisent leur dite horloge avec l'horloge interne du terminal mobile (3).

16. Système domotique selon l'une des revendications 1 à 15, dans lequel :
- tout ou partie des appareils électriques domestiques (2a, 2b, 2c, 2d, 2e) du réseau intègrent une mémoire (24) dans laquelle sont enregistrés un ou plusieurs logiciels, programmes ou micro-programmes informatiques,
- le signal radiofréquence émis par le terminal mobile (3) dans la zone de contrôle (1) contient une ou plusieurs informations de mise à jour des logiciels, programmes ou micro-programmes informatiques enregistrées dans la mémoire (24) desdits appareils électriques domestiques (2a, 2b, 2c, 2d, 2e) qui intègrent une telle mémoire,
- en réponse à la réception de ces informations de mise à jour, les appareils électriques domestiques (2a, 2b, 2c, 2d, 2e) du réseau qui intègrent une telle mémoire (24), mettent à jour leurs logiciels, programmes ou micro-programmes informatiques en fonction desdites informations de mise à jour.

17. Système domotique selon la revendication 1, dans lequel les informations véhiculées dans le réseau, entre les appareils électriques domestiques (2a, 2b, 2c, 2d, 2e), sont des données de fonctionnement propres à chacun desdits appareils.

## Patentansprüche

1. Domotiksystem, umfassend:
- eine Kontrollzone (1), die geografisch im Raum begrenzt ist,
- mindestens ein mobiles Endgerät (3), das dazu vorgesehen ist, in der Kontrollzone (1) Funkfrequenzsignale zu senden und zu empfangen,
- mehrere elektrische Haushaltsgeräte (2a, 2b, 2c, 2d, 2e), die in der Kontrollzone (1) installiert sind,
- wobei jedes elektrische Haushaltsgerät (2a, 2b, 2c, 2d, 2e) einen Sender (22) und einen Empfänger (21) von Funkfrequenzsignalen integriert,
- wobei die elektrischen Haushaltsgeräte (2a, 2b, 2c, 2d, 2e) in einem Netz angeordnet sind, um zu kommunizieren, um Informationen untereinander zu transportieren, wobei die Kommunikation durch das Senden und Empfangen von Funkfrequenzsignalen, die die Informationen enthalten, in der Kontrollzone (1) erfolgt,
- wobei die Kommunikation zwischen den elektrischen Haushaltsgeräten (2a, 2b, 2c, 2d, 2e) des Netzes als Antwort auf den Empfang eines von dem mobilen Endgerät (3) in der Kontrollzone (1) gesandten Funkfrequenzsignals durch mindestens eines der Geräte initiiert wird,
**dadurch gekennzeichnet, dass**:
- jedes elektrische Haushaltsgerät (2a, 2b, 2c, 2d, 2e) des Netzes dazu vorgesehen ist, Funkfrequenzsignale in einer Sende-/Empfangszone (Z2a, Z2b, Z2c, Z2d, Z2e), die ihm eigen ist, von seinem Sender (22) aus zu senden und von seinem Empfänger (21) aus zu empfangen,
- die elektrischen Haushaltsgeräte (2a, 2b, 2c, 2d, 2e) des Netzes in der Kontrollzone (1) angeordnet sind, so dass die Sende-/Empfangszone (Z2a, Z2b, Z2c, Z2d, Z2e) eines Geräts mindestens ein weiteres Gerät einschließt, wobei die Sende-/Empfangszonen (Z2a, Z2b, Z2c, Z2d, Z2e) nebeneinander angeordnet sind, um alle Geräte einzuschließen,
- jedes Gerät (2a, 2b, 2c, 2d, 2e) dazu vorgesehen ist, mit dem oder den anderen Geräten des Netzes, die sich in seiner eigenen Sende-/Empfangszone (Z2a, Z2b, Z2c, Z2d, Z2e) befinden, zu kommunizieren, wobei die Informationen in den Sende-/Empfangszonen transportiert werden, wobei die Informationen direkt zwischen den Geräten des Netzes zirkulieren.

2. Domotiksystem nach Anspruch 1, bei dem die Nebeneinanderanordnung aller Sende-/Empfangszonen (Z2a, Z2b, Z2c, Z2d, Z2e) die gesamte Kontrollzone (1) abdeckt.

3. Domotiksystem nach einem der vorhergehenden Ansprüche, bei dem die elektrischen Haushaltsgeräte (2a, 2b, 2c, 2d, 2e) des Netzes miteinander im Nahfeld kommunizieren.

4. Domotiksystem nach einem der Ansprüche 1 bis 3, bei dem eine Information, die im Netz zirkuliert:
- von nur einem der elektrischen Haushaltsgeräte (2a, 2b, 2c, 2d, 2e) des Netzes genutzt wird,
- oder von jedem der elektrischen Haushaltsgeräte (2a, 2b, 2c, 2d, 2e) des Netzes genutzt wird,
- oder von gewissen elektrischen Haushaltsgeräten (2a, 2b, 2c, 2d, 2e) des Netzes genutzt wird, wobei die anderen Geräte des Netzes nur als Relais oder Repeater dienen.

5. Domotiksystem nach einem der Ansprüche 1 bis 4, bei dem die Kommunikation zwischen den elektrischen Haushaltsgeräten (2a, 2b, 2c, 2d, 2e) unidirektional erfolgt, Informationen nur von einem der Geräte (2a), das als Sender dient, in Richtung der anderen elektrischen Haushaltsgeräte (2b, 2c, 2d, 2e), die als Empfänger dienen und keine Informationen an das Sendegerät zurücksenden, gesandt werden.

6. Domotiksystem nach einem der Ansprüche 1 bis 4, bei dem die Kommunikation zwischen den elektrischen Haushaltsgeräten (2a, 2b, 2c, 2d, 2e) des Netzes bidirektional erfolgt, wobei jedes Gerät oder nur gewisse von ihnen dazu vorgesehen sind, Informationen mit den anderen Geräten zu senden und zu empfangen.

7. Domotiksystem nach einem der Ansprüche 1 bis 6, bei dem:
- die Gesamtheit oder ein Teil der elektrischen Haushaltsgeräte (2a, 2c, 2e) des Netzes Heiz- und/oder Klimageräte sind,
- die in dem Netz zwischen den elektrischen Haushaltsgeräten (2a, 2b, 2c, 2d, 2e) transportierten Informationen Befehle sind, um die Funktion der Heiz- und/oder Klimageräte (2a, 2c, 2e) zu steuern.

8. Domotiksystem nach Anspruch 7, bei dem das mobile Endgerät (3) dazu vorgesehen ist, automatisch, kontinuierlich oder intermittierend ein Funkfrequenzsignal in die Kontrollzone (1) zu senden, wobei das Signal die Befehle zur Steuerung der Funktion der Heiz- und/oder Klimageräte (2a, 2c, 2e) enthält.

9. Domotiksystem nach Anspruch 8, bei dem, wenn keines der elektrischen Haushaltsgeräte (2a, 2b, 2c, 2d, 2e) des Netzes ein von dem mobilen Endgerät (3) gesandtes Funkfrequenzsignal in der Kontrollzone (1) während einer bestimmten Zeitdauer empfängt, jedes der Heiz- und/der Klimageräte (2a, 2c, 2e) seinen Betriebszustand ändert.

10. Domotiksystem nach einem der Ansprüche 8 oder 9, bei dem:
- eines oder mehrere weitere mobile Endgeräte dazu vorgesehen sind, in der Kontrollzone (1) Funkfrequenzsignale zu senden und zu empfangen,
- alle mobilen Endgeräte einem Prioritätsrang in Bezug zu jedem der Heiz- und/oder Klimageräte (2a, 2c, 2e) des Netzes zugeordnet sind,
- die Steuerung des Betriebs jedes Heiz- und/oder Klimageräts (2a, 2c, 2e) des Netzes auf den Prioritätsrängen der mobilen Endgeräte basiert.

11. Domotiksystem nach einem der Ansprüche 7 bis 10, bei dem:
- jedes Heiz- und/oder Klimagerät (2a, 2c, 2e) des Netzes programmiert ist, um, wenn sein Betrieb aktiv ist, seine Temperatur um den vordefinierten Wert einzustellen,
- als Antwort auf dem Empfang des von dem mobilen Endgerät (3) in der Kontrollzone (1) gesandten Funkfrequenzsignals das erste elektrische Haushaltsgerät (2a, 2b, 2c, 2d, 2e) des Netzes, das das Signal mit der stärksten Intensität empfängt, und/oder das sich in der Sende-/Empfangszone (Z3) des mobilen Endgeräts befindet:
∘ seinen Betriebszustand ändert und seine Temperatur um ihren vordefinierten Wert einstellt, falls das erste Gerät ein Heiz- und/oder Klimagerät ist,
∘ in dem Netz ein Funkfrequenzsignal sendet, das Befehle für die Aktivierung des Betriebs der anderen Heiz- und/oder Klimageräte (2a, 2c, 2e) des Netzes enthält,
- als Antwort auf den Empfang des von dem ersten Gerät im Netz gesandten Funkfrequenzsignals jedes weitere Heiz- und/oder Klimagerät (2a, 2c, 2e) des Netzes seinen Betriebszustand ändert und seine Temperatur um ihren vordefinierten Wert einstellt.

12. Domotiksystem nach Anspruch 11, bei dem jedes Heiz- und/oder Klimagerät (2a, 2c, 2e) des Netzes auch programmiert ist, um seine Temperatur um den vordefinierten Wert und während eines vordefinierten Zeitraums einzustellen.

13. Domotiksystem nach einem der Ansprüche 7 bis 10, bei dem:
- das von dem mobilen Endgerät (3) gesandte Funkfrequenzsignal Befehle zur direkten Steuerung des Betriebs der Heiz- und/oder Klimageräte (2a, 2c, 2e) und jeweiligen Einstellung ihrer Temperatur um den vordefinierten Wert enthält,
- als Antwort auf den Empfang eines von dem mobilen Endgerät (3) in der Kontrollzone (1) gesandten Funkfrequenzsignals das erste elektrische Haushaltsgerät (2a, 2b, 2c, 2d, 2e) des Netzes, das das Signal mit der stärksten Intensität empfängt, und/oder das sich in der Sende-/Empfangszone (Z3) des mobilen Endgeräts befindet:
∘ seinen Betriebszustand ändert und seine Temperatur um ihren vordefinierten Wert einstellt, falls das erste Gerät ein Heiz- und/oder Klimagerät ist,
∘ in dem Netz ein Funkfrequenzsignal sendet, das Befehle für die Steuerung des Betriebs der anderen Heiz- und/oder Klimageräte (2a, 2c, 2e) des Netzes enthält,
- als Antwort auf den Empfang des von dem ersten Gerät im Netz gesandten Funkfrequenzsignals jedes weitere Heiz- und/oder Klimagerät (2a, 2c, 2e) des Netzes seinen Betriebszustand ändert und seine Temperatur um ihren vordefinierten Wert einstellt.

14. Domotiksystem nach Anspruch 13, bei dem das von dem mobilen Endgerät (3) gesandte Funkfrequenzsignal Befehle zur Steuerung des Betriebs der Heiz- und/oder Klimageräte (2a, 2c, 2e) und zur jeweiligen Einstellung ihrer Temperatur um einen vordefinierten Wert und während eines vordefinierten Zeitraums enthält.

15. Domotiksystem nach einem der Ansprüche 1 bis 14, bei dem:
- die Gesamtheit oder ein Teil der elektrischen Haushaltsgeräte (2a, 2b, 2c, 2d, 2e) des Netzes eine innere Uhr integrieren, wobei das mobile Endgerät (3) auch eine innere Uhr integriert,
- das von dem mobilen Endgerät (3) in der Kontrollzone (1) gesandte Funkfrequenzsignal eine Zeitinformation enthält, die der Zeit entspricht, die seine innere Uhr zum Zeitpunkt des Sendens des Signals angibt,
- als Antwort auf den Empfang dieser Zeitinformation die elektrischen Haushaltsgeräte (2a, 2b, 2c, 2d, 2e) des Netzes, die eine innere Uhr integrieren, ihre Uhr mit der inneren Uhr des mobilen Endgeräts (3) synchronisieren.

16. Domotiksystem nach einem der Ansprüche 1 bis 15, bei dem:
- die Gesamtheit oder ein Teil der elektrischen Haushaltsgeräte (2a, 2b, 2c, 2d, 2e) des Netzes einen Speicher (24) integrieren, in dem eine oder mehrere Softwares, Computerprogramme oder -mikroprogramme gespeichert sind,
- das von dem mobilen Endgerät (3) in der Kontrollzone (1) gesandte Funkfrequenzsignal eine oder mehrere Informationen zur Aktualisierung der Software, Computerprogramme oder -mikroprogramme enthält, die in dem Speicher (24) der elektrischen Haushaltsgeräte (2a, 2b, 2c, 2d, 2e), die einen solchen Speicher integrieren, gespeichert sind,
- als Antwort auf den Empfang dieser Aktualisierungsinformationen die elektrischen Haushaltsgeräte (2a, 2b, 2c, 2d, 2e) des Netzes, die einen solchen Speicher (24) integrieren, ihre Software, Computerprogramme oder -mikroprogramme in Abhängigkeit von den Aktualisierungsinformationen aktualisieren.

17. Domotiksystem nach Anspruch 1, bei dem die in dem Netz zwischen den elektrischen Haushaltsgeräten (2a, 2b, 2c, 2d, 2e) transportierten Informationen Betriebsdaten sind, die jedem der Geräte eigen sind.

## Claims

1. Home automation system including:
- a control area (1) geographically defined in space,
- at least one mobile terminal (3) designed to transmit and receive radiofrequency signals in the control area (1),
- a plurality of electric household appliances (2a, 2b, 2c, 2d, 2e) installed in the control area (1),
- each electric household appliance (2a, 2b, 2c, 2d, 2e) incorporates a radiofrequency signal transmitter (22) and receiver (21),
- the electric household appliances (2a, 2b, 2c, 2d, 2e) are arranged in a network so as to communicate in order to convey information between one another, which communication is performed by transmitting and receiving radiofrequency signals containing said information in the control area (1),
- the communication between the electric household appliances (2a, 2b, 2c, 2d, 2e) of the network is initiated in response to the reception, by at least one of said appliances, of a radiofrequency signal transmitted by the mobile terminal (3) in the control area (1),
**characterized in that:**
- each electric household appliance (2a, 2b, 2c, 2d, 2e) of the network is designed to transmit radiofrequency signals from its transmitter (22) and receive radiofrequency signals from its receiver (21) in a transmission/reception area (Z2a, Z2b, Z2c, Z2d, Z2e) that is specific thereto,
- the electric household appliances (2a, 2b, 2c, 2d, 2e) of the network are positioned in the control area (1) such that the transmission/reception area (Z2a, Z2b, Z2c, Z2d, Z2e) of an appliance includes at least one other appliance, the transmission/reception areas (Z2a, Z2b, Z2c, Z2d, Z2e) being juxtaposed so as to include all of said appliances,
- each appliance (2a, 2b, 2c, 2d, 2e) is designed to communicate with the other appliance or appliances of the network that are situated in its own transmission/reception area (Z2a, Z2b, Z2c, Z2d, Z2e), the information being conveyed in said transmission/reception areas, which information flows directly between said appliances of said network.

2. Home automation system according to Claim 1, wherein the juxtaposition of all of the transmission/reception areas (Z2a, Z2b, Z2c, Z2d, Z2e) covers the entire control area (1).

3. Home automation system according to either of the preceding claims, wherein the electric household appliances (2a, 2b, 2c, 2d, 2e) of the network communicate with one another step-by-step.

4. Home automation system according to one of Claims 1 to 3, wherein information flowing in the network:
- is utilized by just one of the electric household appliances (2a, 2b, 2c, 2d, 2e) of the network,
- or is utilized by each of the electric household appliances (2a, 2b, 2c, 2d, 2e) of the network,
- or is utilized by some electric household appliances (2a, 2b, 2c, 2d, 2e) of the network, the other appliances of said network serving only as relays or repeaters.

5. Home automation system according to one of Claims 1 to 4, wherein the communication between the electric household appliances (2a, 2b, 2c, 2d, 2e) is one-way, and information is transmitted only from one of the appliances (2a) serving as a transmitter, to other electric household appliances (2b, 2c, 2d, 2e) serving as a receiver, not returning information to said transmitter appliance.

6. Home automation system according to one of Claims 1 to 4, wherein the communication between the electric household appliances (2a, 2b, 2c, 2d, 2e) of the network is two-way, each appliance, or only some of them, being designed to receive and transmit information with the other appliances.

7. Home automation system according to one of Claims 1 to 6, wherein:
- all or some of the electric household appliances (2a, 2c, 2e) of the network are heating and/or air-conditioning appliances,
- the information conveyed in the network, between the electric household appliances (2a, 2b, 2c, 2d, 2e), are commands for controlling the operation of said heating and/or air-conditioning appliances (2a, 2c, 2e).

8. Home automation system according to Claim 7, wherein the mobile terminal (3) is designed to automatically transmit, continuously or intermittently, a radiofrequency signal in the control area (1), which signal contains commands for controlling the operation of the heating and/or air-conditioning appliances (2a, 2c, 2e).

9. Home automation system according to Claim 8, wherein, if none of the electric household appliances (2a, 2b, 2c, 2d, 2e) of the network receives a radiofrequency signal transmitted by the mobile terminal (3), in the control area (1), for a predetermined period, then each of the heating and/or air-conditioning appliances (2a, 2c, 2e) changes its operating state.

10. Home automation system according to either of Claims 8 and 9, wherein:
- one or more other mobile terminals are designed to transmit and receive radiofrequency signals in the control area (1),
- all of the mobile terminals are associated with a priority rank with respect to each of the heating and/or air-conditioning appliances (2a, 2c, 2e) of the network,
- controlling the operation of each heating and/or air-conditioning appliance (2a, 2c, 2e) of the network is based on the priority ranks of the mobile terminals.

11. Home automation system according to one of Claims 7 to 10, wherein:
- each heating and/or air-conditioning appliance (2a, 2c, 2e) of the network is programmed, when its operation is active, so as to adjust its temperature around a predefined value,
- in response to the reception of the radiofrequency signal transmitted by the mobile terminal (3) in the control area (1), the first electric household appliance (2a, 2b, 2c, 2d, 2e) of the network that receives said signal with the highest intensity and/or that is situated in the transmission/reception area (Z3) of said mobile terminal:
∘ changes its operating state and adjusts its temperature around its predefined value, if said first appliance is a heating and/or air-conditioning appliance,
∘ transmits, in the network, a radiofrequency signal containing commands for activating the operation of the other heating and/or air-conditioning appliances (2a, 2c, 2e) of the network,
- in response to the reception of the radiofrequency signal transmitted by the first appliance in the network, each other heating and/or air-conditioning appliance (2a, 2c, 2e) of the network changes its operating state and adjusts its temperature around its predefined value.

12. Home automation system according to Claim 11, wherein each heating and/or air-conditioning appliance (2a, 2c, 2e) of the network is also programmed so as to adjust its temperature around the predefined value, and for a predefined period.

13. Home automation system according to one of Claims 7 to 10, wherein:
- the radiofrequency signal transmitted by the mobile terminal (3) contains commands for directly controlling the operation of the heating and/or air-conditioning appliances (2a, 2c, 2e) and adjusting each of their temperatures around a predefined value,
- in response to the reception of a radiofrequency signal transmitted by the mobile terminal (3) in the control area (1), the first electric household appliance (2a, 2b, 2c, 2d, 2e) of the network that receives said signal with the highest intensity and/or that is situated in the transmission/reception area (Z3) of said mobile terminal:
∘ changes its operating state and adjusts its temperature around its predefined value, if said first appliance is a heating and/or air-conditioning appliance,
∘ transmits, in the network, a radiofrequency signal containing commands for controlling the operation of the other heating and/or air-conditioning appliances (2a, 2c, 2e) of the network,
- in response to the reception of the radiofrequency signal transmitted by the first appliance in the network, each other heating and/or air-conditioning appliance (2a, 2c, 2e) of the network changes its operating state and adjusts its temperature around its predefined value.

14. Home automation system according to Claim 13, wherein the radiofrequency signal transmitted by the mobile terminal (3) contains commands for controlling the operation of the heating and/or air-conditioning appliances (2a, 2c, 2e) and adjusting each of their temperatures around a predefined value, and for a predefined period.

15. Home automation system according to one of Claims 1 to 14, wherein:
- all or some of the electric household appliances (2a, 2b, 2c, 2d, 2e) of the network incorporate an internal clock, the mobile terminal (3) also incorporating an internal clock,
- the radiofrequency signal transmitted by the mobile terminal (3) in the control area (1) contains time information that corresponds to the time provided in its internal clock at the time of the transmission of said signal,
- in response to the reception of this time information, the electric household appliances (2a, 2b, 2c, 2d, 2e) of the network that incorporate an internal clock synchronize their said clock with the internal clock of the mobile terminal (3).

16. Home automation system according to one of Claims 1 to 15, wherein:
- all or some of the electric household appliances (2a, 2b, 2c, 2d, 2e) of the network incorporate a memory (24) in which there are recorded one or more items of computer software, programs or microprograms,
- the radiofrequency signal transmitted by the mobile terminal (3) in the control area (1) contains one or more items of information for updating the computer software, programs or microprograms recorded in the memory (24) of said electric household appliances (2a, 2b, 2c, 2d, 2e) that incorporate such a memory,
- in response to the reception of this update information, the electric household appliances (2a, 2b, 2c, 2d, 2e) of the network that incorporate such a memory (24) update their computer software, programs or microprograms on the basis of said update information.

17. Home automation system according to Claim 1, wherein the information conveyed in the network, between the electric household appliances (2a, 2b, 2c, 2d, 2e), is operating data specific to each of said appliances.
